# EUROPÄISCHE PATENTSCHRIFT

(11) **EP 1 685 084 B1**
(45) Veröffentlichungstag und Bekanntmachung des Hinweises auf die Patenterteilung: **09.05.2012**
(21) Anmeldenummer: 04803163.7
(22) Anmeldetag: 15.11.2004
(51) Int. Cl.: C05C 3/00, C05D 3/02, C05F 3/00, C01C 1/242, C01F 11/18

(54) **VERFAHREN UND VORRICHTUNG ZUR GEWINNUNG VON STICKSTOFFDÜNGER AUS ORGANISCHEN ABFALLPRODUKTEN**
METHOD AND DEVICE FOR OBTAINING NITROGENOUS FERTILISERS FROM ORGANIC WASTE PRODUCTS
PROCEDE ET DISPOSITIF POUR OBTENIR DES ENGRAIS AZOTES A PARTIR DE DECHETS ORGANIQUES

(30) Priorität: 19.11.2003 DE 10354063; 04.11.2004 DE 102004053297
(43) Veröffentlichungstag der Anmeldung: 02.08.2006
(73) Patentinhaber: Phoenix Beteiligungs GmbH, 6858 Schwarzach (AT)
(72) Erfinder: SPINDLER, Herbert, 06120 Halle (DE); BAUERMEISTER, Ute, 04205 Leipzig (DE); MEIER, Thomas, 13583 Berlin (DE); TESKE, Michael, 06258 Schkopau (DE)
(74) Vertreter: Wablat, Wolfgang
(86) Internationale Anmeldenummer: PCT/EP2004/013034
(87) Internationale Veröffentlichungsnummer: WO 2005/049495

(56) Entgegenhaltungen:
- DE-A1- 3 603 739
- DE-A1- 19 547 320
- US-A- 4 076 515
- US-B1- 6 368 849

## Beschreibung

Die Erfindung betrifft ein Verfahren und eine Vorrichtung zur Gewinnung von Stickstoffdünger aus organischen Abfallprodukten in flüssiger Phase (Suspension, Emulsion, Lösung) sowie zur Hygienisierung der Abfälle bzw. zur Emissionsminderung durch thermische Behandlung unter Verwendung von mineralischen Zusätzen.

Es sind zahlreiche Verfahren zur Gewinnung von Düngemitteln aus organischen Abfällen wie frischer und vergorener Gülle, Tierexkrementen, Jauche, Mist oder Klärschlamm bekannt, die sowohl auf die Herstellung des Düngemittels als auch auf die Hygienisierung der Ausgangsprodukte und die Minderung der Emission von Geruchsstoffen und schädlichen Treibhausgasen, insbesondere Ammoniak, gerichtet sind.

So beschreiben DE 196 30 387 A1 und DE 101 20 372 A1 Verfahren zur Herstellung eines Düngemittels aus Gülle mit erheblich verminderter Ammoniakfreisetzung, die auf der chemischen Reaktion von Gülle mit Humus beruhen.

DE 43 04 342 C1 schlägt ein Verfahren zur Herstellung eines Düngemittels auf Basis von Klärschlamm durch Vermischen mit Calciumsulfat vor. In DE 41 19 504 A1 wird ein Verfahren angegeben, einen Kombinationsdünger durch Vermischen von Gülle und/oder Kot mit Gips zu gewinnen.

Nach DE 44 44 726 C1 wird ein Dünger durch Vermischen von Gülle mit Tonmehl und Verfestigen der erhaltenen Masse hergestellt. In DE 196 44 613 C2 wird ein pelletierter Dünger aus Gülle unter Verwendung von CaO-haltigen Rückständen aus Rauchgasreinigungsanlagen vorgeschlagen.

Es sind auch Verfahren wie in DE 40 33 509 A1 bekannt, nach denen flüssige organische Dünger und Brüdenwasser mit biogenen Stoffen wie Stroh, und mineralischen wie Gips zu einem streufähigen Dünger vermischt und anschließend einer thermischen Nachbehandlung bei 70 bis 80 °C unterworfen werden.

In DE 195 47 320 A1 wird ein Verfahren und eine Vorrichtung zur Erzeugung von ammoniakfreiem und sterilem Vollwertdünger aus biologischen Reststoffen beschrieben, wobei das ausgegorene Material mindestens 1 Stunde auf Siedetemperatur erhitzt und der freigesetzte Ammoniak und andere flüchtige Stoffe mit dem Dampf ausgetragen werden. Nach DE 42 43 918 A1 werden die fermentierte Gülle in einer Kolonne gekocht und die austretenden ammoniakhaltigen Dämpfe in einem Mischkondensator unter Bildung von Ammoniumsalzen kondensiert.

Im US-Patent 4,076,515 wird ein vielstufiges Verfahren zur Abtrennung von Ammoniak bei der Abwasserbehandlung durch Zusatz von Alkali beschrieben. In einer ersten Stufe werden mittels anaerober Digestion zunächst CO₂ und CH₄ aus dem Abwasser entfernt. Das anschließend aus den Digester-Abläufen in einer weiteren Stufe durch Alkali-Zugabe freigesetzte NH₃ wird durch Druckminderung und/oder Temperaturerhöhung als Gas ausgetrieben und kann durch Umsetzung mit Säuren, beispielsweise Schwefelsäure, zu Ammoniumsalzen umgewandelt werden, ohne dass dabei ein reiner anorganischer Stickstoffdünger hergestellt werden könnte. Erzielt wurde lediglich eine Anreicherung des Stickstoffgehaltes im behandelten Abfallschlamm von 1-2% auf 10%. Das dargestellte Verfahren ist aufwendig und aufgrund der Verwendung ätzender und giftiger Chemikalien gesundheitlich bedenklich und umweltgefährdend.

Alle oben genannten Verfahren sind unwirtschaftlich und erfüllen die Ziele des erfindungsgemäßen Verfahrens nur unvollständig. Die Verfahren, die unter Vermischung der Abprodukte mit Zusätzen zu einem Dünger gelangen, müssen diesen in aufwendiger Weise trocknen und konfektionieren. Diejenigen Verfahren, die Ammoniak in der Siedehitze austreiben, müssen die nicht einfache Aufgabe der Brüdenkondensation und Wasserentfernung lösen.

Ziel der Erfindung ist die Emissionsminderung von organischen Abfällen, beispielsweise Gülle, bei gleichzeitiger Herstellung eines hochwertigen Stickstoffdüngers und Umwandlung der Abläufe, insbesondere von Biogasanlagen, in ein umweltfreundliches hygienisch unbedenkliches Trübwasser durch ein wirtschaftliches und technisch einfaches Verfahren. Insbesondere war es die Aufgabe der Erfindung, ein einfaches aber effizientes Verfahren bereitzustellen, welches ohne Zugabe von Säuren oder Basen zum zu behandelnden Abfallprodukt arbeitet und welches außerdem die bekannten Verfahren in seiner Leistung übertrifft.

Erfindungsgemäß gelingt dies durch ein Verfahren unter Einsatz organischer Abfallprodukte in flüssiger Phase (Suspension, Emulsion, Lösung) durch thermische Behandlung unter Verwendung von mineralischen Zusätzen, bei dem das Abfallprodukt ohne Zusatz von Chemikalien wie Saüren oder Laugen auf Temperaturen zwischen 40 °C und 90 °C erhitzt, gleich zeitig der Druck auf zunächst 10 bis 30 kPa evakuiert und dann der Druck auf 40 bis 80 kPa erhöht wird, ohne dass merkliche Mengen wasser mit übergehen, das dabei entweichende und Kohlendioxid und Ammoniak enthaltende Gas gekühlt und in ein wässriges Absorptionsmittel eingeleitet bzw. mit ihm in Kontakt gebracht wird, der hierbei gebildete Stickstoffdünger ausgetragen und das nicht absorbierte und Kohlendioxid enthaltende Überschussgas in den Ablaufbehälter zurückgepumpt wird, wobei der zu Beginn des Prozesses durch eine Vakuumpumpe erzeugte Unterdruck durch den Verlauf des Prozesses autogen aufrecht erhalten wird.

Vorzugsweise wird das nicht absorbierte und Kohlendioxid enthaltende Überschussgas in den Kreislauf zurück geleitet, indem es entweder
- durch das zu behandelnde Abfallprodukt oder
- direkt oberhalb des zu behandelnden Abfallprodukts oder
- über das Gaskühlsystem oberhalb des zu behandelnden Abfallprodukts oder
- geteilt und ein Teilstrom durch das Abfallprodukt und ein weiterer Teilstrom oberhalb des Abfallprodukts
eingeleitet wird.

Zweckmäßig wird dabei im Gaskühlsystem eine Temperatur eingestellt, die mindestens 3 und höchstens 15 K unter der Temperatur im Strippbehälter liegt, während im hinteren Teil die weitere Abkühlung auf 40 °C erfolgt.

Es kann vorteilhaft sein, dem im Kreislauf geführten Überschussgas von außen zusätzlich Kohlendioxid im Gemisch mit anderen Gasen, z. B. aus Biogasanlagen, zuzusetzen.

Günstig ist es, bei einem Druck von 10 bis 70 kPa zu arbeiten.

Dabei hat es sich als vorteilhaft erwiesen, zunächst auf 10 bis 30 kPa zu evakuieren und dann den Druck auf 40 bis 80 kPa zu erhöhen.

Es hat sich auch gezeigt, dass das Verfahren vorzugsweise für die Behandlung tierischer Exkremente, wie Gülle und Kot, in flüssiger Phase geeignet ist, ohne auf diese beschränkt zu sein. Der Effekt lässt sich auch auf weitere organische Abprodukte, wie Flüssigmist und stickstoffhaltige Abläufe, übertragen.

Als besonders günstig hat es sich erwiesen, bei Verwendung vergorener Gülle diese bei vermindertem Druck auf 70 bis 85 °C zu erhitzen.

Dabei kann es von Vorteil sein, die vergorene Gülle vor ihrer thermischen Vakuumbehandlung zu filtrieren. Die nach der thermischen Behandlung zurückbleibende hygienisierte Ablaufgülle kann dann als praktisch geruchloses und an Stickstoffverbindungen abgereichertes Trübwasser auf Wiesen und Felder aufgesprüht werden. Die durch das Filtrieren abgetrennten Feststoffe sind gut kompostierbar.

Als besonders geeignetes wässriges Absorptionsmittel hat sich eine Gips-Aufschlämmung in Wasser mit einem Feststoffgehalt von 10 Masse% bis 50 Masse% erwiesen. Es ist günstig, diese Suspension zu rühren und am Sumpf des Behälters den gebildeten, ausgefallenen Kalk und Ammonsulfat enthaltenen, Stickstoffdünger regelmäßig abzuziehen. Der Dünger kann entweder als Dünnschlamm oder auch nach Trocknung als krümelige Masse oder als Pulver direkt verwendet oder zwischengelagert werden.

Das erfindungsgemäße Verfahren kombiniert bei der Vorzugsvariante eine Entgasung der Abfälle im Vakuum mit einer chemischen Reaktion der entweichenden Gase in einer Suspension eines Mineralmehles. Unerwartet wurde dabei folgender überraschende Effekt gefunden: Erniedrigt man den Atmosphärendruck in einem mit frischer oder vergorener Gülle oder Flüssigmist gefüllten Behälter bei gleichzeitigem mäßigen Erwärmen auf 40 °C bis 90 °C, so entweicht aus der Flüssigkeit zunächst Kohlendioxid und bei etwas höherer Temperatur Ammoniak, ohne dass merkliche Mengen Wasser mit übergehen. Leitet man diese Gase in eine Mineralmehlsuspension, die Calciumverbindungen enthält, so reagieren sie unter Bildung von Kalk und Ammoniumsalzen aber so, dass der Unterdruck erhalten bleibt und die Reaktion autogen weitergeht, wenn die Temperatur im Ablaufbehälter auf dem vorbestimmten Wert aufrecht erhalten wird.

Auf diese Weise kann der Ammoniumstickstoff, z. B. aus einer vergorenen Gülle, fast vollständig entfernt werden. Zurück bleibt ein praktisch geruchloses Trübwasser, das nicht mehr gast, aber noch die mineralischen Bestandteile der Gülle, wie Kalium und Phosphat, in Form seiner Verbindungen enthält. Aus der gerührten Suspension in der Vorlage kann der fertige Stickstoffdünger, der neben Ammoniumsalzen Kalk enthält, als konzentrierte Suspension abgezogen werden. Er ist ohne weitere Nachbehandlung einsetzbar.

Da die in den Vorlagebehälter eingeleiteten Gase von der wässrigen Mineralmehlsuspension nicht vollständig absorbiert werden, werden sie in den Strippbehälter zurückgeführt und so im Kreislauf geführt.

Als wässriges Absorptionsprodukt ist auch eine saure Lösung, insbesondere schwefelsaure Lösung, geeignet. Ebenso ist natürlich auch eine Kombination mit einer Gips-Aufschlämmung in Wasser eine zweckmäßige Variante.

Es wird ein auffallend besseres Ergebnis erhalten, wenn die in den Vorlagebehälter eingeleiteten Gase in den Strippbehälter zurückgeführt und so im Kreislauf geführt werden. Diese Kreislaufführung des Überschussgases ist wesentliches Merkmal der Erfindung.

Die Vorrichtung besteht aus den folgenden wesentlichen Teilen:
- Strippbehälter für Erwärmung unter Unterdruck (1)
- Vorlagebehälter für Reaktion in heterogener Phase (2)
- Wärmespeicher (Thermosyphon) zum Wärmetausch (3)
- Vakuumpumpe (4)
- Heizwasserpumpe (5)
- Umlaufventilator (6)
- Rührer (7)
- sowie an sich bekannten Rohrleitungen, Absperrorganen und der
- Mess- und Regelungstechnik
zur Sicherung einer wirksamen Kreislaufführung
- die Vorrichtung ein zusätzliches Gaskühlsystem mit aufsteigender Trennsäule und absteigendem Kühler und
- zusätzliche Rohrleitungen und Kugelhähne enthält, damit das Kreislaufgas
- ganz oder teilweise in den Strippbehälter oberhalb des Abfallprodukts oder
- über das Kühlsystem in den Vorlagebehälter oder
- teilweise in den Strippbehälter in das Abfallprodukt eingeleitet werden kann, wobei die Restströme bei Teilung des Kreislaufgases wahlweise in die zwei übrigen der bezeichneten Zuflussstellen eingeleitet werden.

Das Verfahren und die Vorrichtung zeichnen sich durch geringe Investitions- und Betriebskosten aus und vermeiden Gefahren für Mensch und Umwelt. Das Verfahren hat minimalen Stromverbrauch, da der Unterdruck im System erhalten bleibt, wenn er einmal durch die Vakuumpumpe erzeugt wurde. Die nötige Prozesswärme wird weitgehend durch die Blockheizkraftwerk (BHKW) Abwärme der vorgeschalteten Biogasanlage bereitgestellt. Weitere Chemikalien wie etwa Säuren oder Laugen werden in der bevorzugten Ausführungsform der Erfindung nicht benötigt. Die für das Verfahren erforderliche Anlage ist leicht zu bedienen und kann als Batchprozess aber auch kontinuierlich betrieben werden.

Die Erfindung wird durch nachfolgende Beispiele näher beschrieben und die dafür erforderliche Vorrichtung in drei bevorzugten Varianten (in Beispiel 1 ausgewiesen) und zwei Spezialfälle (in Beispiel 2 und 3 beschrieben) näher dargestellt, ohne darauf beschränkt zu sein. Die Beispiele weisen nicht alle Merkmale der Erfindung auf, erleichtern aber das Verständnis der Erfindung.

### BEISPIELE

### Beispiel 1

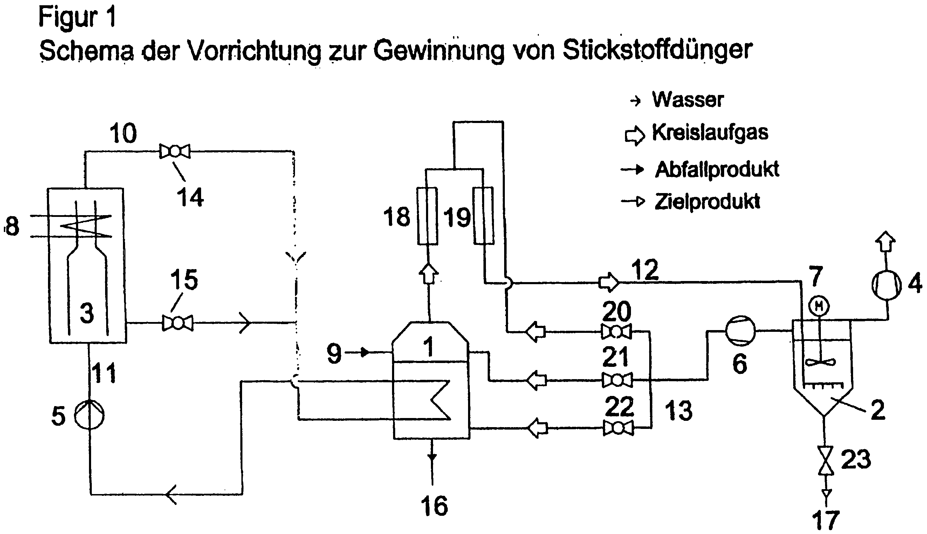

Fig. 1 zeigt beispielhaft das Schema einer solchen Vorrichtung zur Gewinnung von Stickstoffdünger, wie in Beispiel 1 näher beschrieben.

Darin bedeuten:
- 1: Strippbehälter für Erwärmung unter Unterdruck
- 2: Vorlagebehälter für Reaktion in heterogener Phase
- 3: Wärmespeicher (Thermosyphon) zu Wärmeaustausch
- 4: Vakuumpumpe
- 5: Heizwasserpumpe
- 6: Umlaufventilator
- 7: Rührer
- 8: Wärmeüberträger
- 9: Zufuhr von Ablauf
- 10: Ausgang des Heizwassers
- 11: Leitung für Rücklauf des Heizwassers
- 12: Leitung für Strippgas
- 13: Leitung für Rücklaufgas
- 14: Kugelhahn
- 15: Kugelhahn
- 16: Austrag Rückstand
- 17: Austrag Stickstoffdünger
- 18: Aufsteigender Teil des Kühlsystems (Trennsäule)
- 19: Absteigender Teil des Kühlsystems (Kühler)
- 20-22: Kugelhähne für Rücklaufgas
- 23: Absperrhahn

Die als Beispiel 1 ausgewählte Anlage arbeitet im Batchbetrieb. Der Wärmespeicher (3), der beispielhaft als Schichtenspeicher (Thermosyphon) ausgebildet ist, dient der Zwischenspeicherung der Wärme des behandelten Ablaufs zur Aufheizung des frisch eingefüllten flüssigen Abfallproduktes, im Beispiel wurden 250 Liter vergorene Gülle (Ablauf) verwendet. Das Wasser im Wärmespeicher wird durch behandelten Ablauf vorgeheizt und durch Abwärme eines Blockheizkraftwerkes (BHKW) über den Wärmeüberträger (8) nachgeheizt, so dass am Speicherkopf ständig eine Temperatur von 90 °C anliegt. Anfahren des Batchprozesses

Der frische Ablauf wird an der Stelle (9) in den Strippbehälter (1) eingefüllt. Nach dem Verschließen des Behälters erfolgt die Aufheizung mittels Heizwasser, das direkt am Kopf des Schichtenspeichers an der Stelle (10) entnommen wird, auf eine Temperatur von ca. 80 °C. Der Rücklauf des Heizwassers wird dem Wärmespeicher (3) über die Leitung (11) vermittels der Heizwasserpumpe (5) wieder zugeführt und somit in der entsprechenden Temperaturzone wieder eingeschichtet.

Bei Erreichen der Betriebstemperatur wird über eine geregelte Vakuumpumpe (4) im gesamten System ein Druck von 40 kPa eingestellt, wobei die Druckabsenkung langsam und stetig durchzuführen ist. Ist dieser Druck erreicht, wird der Umlaufventilator (6) in Betrieb genommen, so dass das Strippgas mit definiertem Gasdurchsatz aus dem Strippbehälter (1) über die Leitung (12) abgesaugt sowie Rücklaufgas aus dem Vorlagebehälter (2) dem Strippprozess über die Leitung (13) zugeführt wird, wobei mit Hilfe der Kugelhähne 20 bis 22 drei bevorzugte Varianten der erfindungsgemäßen Kreislaufgasführung gewählt werden können:

Variante A: Kugelhahn 21 wird geöffnet, während 20 und 22 geschlossen bleiben. Dann fließt das Kreislaufgas vollständig oberhalb des Abfallproduktspiegels in den Strippbehälter (1) ein.

Variante B: Kugelhahn 21 bleibt geschlossen, die Kugelhähne 20 und 22 werden teilweise geöffnet, so dass ein Teil des Kreislaufgases durch das Abfallprodukt strömt, während der Rest zwischen der Kolonne (18) und Kühler (19) in den Prozess zurückgeführt wird.

Variante C: Der Kugelhahn 20 wird geöffnet, und die Kugelhähne 21 und 22 bleiben geschlossen. Dann fließt das Kreislaufgas vollständig in der bezeichneten Mitte des Kühlsystems in den Prozess zurück.

### Ablauf des Batchprozesses

Während des Batchprozesses werden Temperatur und Druck im Strippbehälter (1) durch Zu- und Abschalten der Heizwasserpumpe (5) bzw. der Vakuumpumpe (4) auf ca. 80 °C und 40 bis 50 kPa gehalten.

Unter diesen Bedingungen werden im Laufe von etwa 2 Stunden aus dem Ablauf zunächst CO₂ und danach Ammoniak ausgetrieben, im Kreislaufprozess umgesetzt und in der nachgeschalteten Vorlage ausgewaschen.

Mit dem dort vorgelegten Mineralmehl, für das beispielhaft Gips verwendet wurde, setzen sich die Reaktionsprodukte zu Kalk und Ammoniumsulfat um, wobei die nicht gelösten Mineralmehl- und Kalkpartikel durch den Rührer (7) in Suspension gehalten werden. Die Rührgeschwindigkeit ist so zu wählen, dass keine Verstopfung von Zu- und Abflüssen durch ausgefallenen Kalk auftritt.

Die Masse des ausgetriebenen Ammoniaks beträgt ca. 850 g pro Batchprozess. Diese setzen ca. 3,4 kg Gips um, der vorher in 10 1 Vorlagewasser suspendiert wurde.

Als Reaktionsprodukte entstehen ca. 2,5 kg Kalk und 3,3 kg Ammoniumsulfat in wässriger Phase. Beide Substanzen können ohne weitere Nachbehandlung als Düngemittel verwendet werden.

### Abfahren des Batchprozesses

Nach weitestgehender Ausgasung des Ammoniaks aus dem Ablauf wird die durch den Umlaufventilator angetriebene Gaszirkulation außer Betrieb genommen. Das System wird belüftet.
Die Abkühlung des behandelten Ablaufs erfolgt, indem durch Schließen des Kugelhahnes (14) und Öffnen des Kugelhahnes (15) im Heizkreislauf nunmehr kaltes Speicherwasser, welches im unteren Teil des Wärmespeichers entnommen wird,
durch den Wärmetauscher des Strippbehälters geführt wird. Die Wärme des behandeltens Ablaufs wird auf diese Weise an das kalte Speicherwasser abgegeben. Das erwärmte Speicherwasser wird wiederum dem Speicher über den Thermosyphon zugeführt und in der Zone entsprechender Temperatur in den Wärmespeicher eingeschichtet.

Nach Abkühlung des behandelten Ablaufs wird der Strippbehälter an der Stelle (16) entleert und steht für die nächste Befüllung zur Verfügung. Aus dem Vorlagebehälter
wird nach jedem Batchprozess (vor dem Neuaufbau des Vakuums für den nächsten Prozess) der Sumpf über den Hahn (23) abgezogen und eine neue Gipssuspension eingegeben.

### Beispiel 2

Die Erfindung ist auch durch die in diesem Beispiel 2 näher beschriebenen Spezialfall realisierbar, der den Vorteil einer etwas einfacheren und schnelleren Durchführung aufweist, aber nicht für alle Anwendungen optimal geeignet ist.

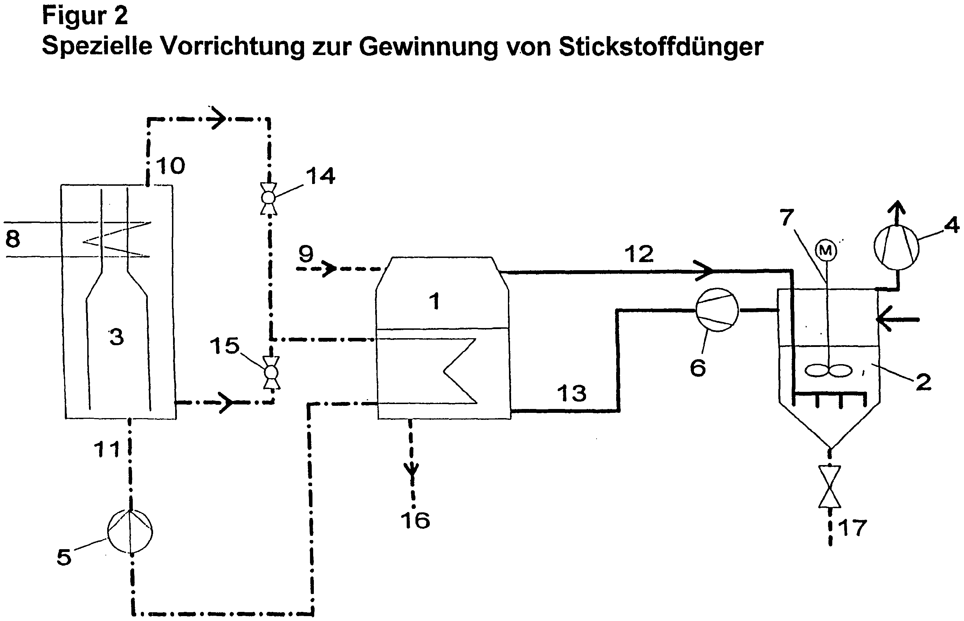

Fig. 2 zeigt beispielhaft das Schema einer solchen speziellen Vorrichtung zur Gewinnung von Stickstoffdünger.
Darin bedeuten:
- Durchgezogene Linie:: Gaskreislauf
- Strichpunktierte Linie:: Heizwasserkreislauf
- Strichlierte Linie:: Stoffflüsse

- 1: Strippbehälter für Erwärmung unter Unterdruck
- 2: Vorlagebehälter für Reaktion in heterogener Phase
- 3: Wärmespeicher (Thermosyphon) zu Wärmeaustausch
- 4: Vakuumpumpe
- 5: Heizwasserpumpe
- 6: Umlaufventilator
- 7: Rührer
- 8: Wärmeüberträger
- 9: Zufuhr von Ablauf
- 10: Ausgang des Heizwassers
- 11: Leitung für Rücklauf des Heizwassers
- 12: Leitung für Strippgas
- 13: Leitung für Rücklaufgas
- 14: Kugelhahn
- 15: Kugelhahn
- 16: Austrag Rückstand
- 17: Austrag Stickstoffdünger

Die als Spezialfall dargestellte Anlage des Beispiels 2 arbeitet wiederum im Batchbetrieb. Der Wärmespeicher (3), der beispielhaft als Schichtenspeicher (Thermosyphon) ausgebildet ist, dient der Zwischenspeicherung der Wärme des behandelten Ablaufs zur Aufheizung des frisch eingefüllten flüssigen Abfallproduktes. Im Beispiel wurden 250 Liter vergorene Gülle (Ablauf) verwendet. Das Wasser im Wärmespeicher wird durch behandelten Ablauf vorgeheizt und durch BHKW-Abwärme über den Wärmeüberträger (8) nachgeheizt, so dass am Speicherkopf ständig eine Temperatur von 90 °C anliegt.

Das Anfahren, der Ablauf und das Abfahren des Batchprozesses erfolgen analog wie in Beispiel 1.

### Beispiel 3

Das Verfahren wird wiederum im Batchbetrieb nach dem in Beispiel 1 dargestellten Schema durchgeführt, aber mit den im folgenden dargestellten Modifikationen.

Der frische Ablauf wird an der Stelle 9 in den Strippbehälter (1) eingefüllt. Nach dem Verschließen des Behälters erfolgt die Aufheizung mittels Heizwasser, das direkt am Kopf des Wärmespeichers (3) an der Stelle (10) entnommen wird, zunächst auf eine Temperatur von 70 - 75 °C. Der Rücklauf des Heizwassers wird dem Wärmespeicher (3) über die Leitung (11) vermittels der Heizwasserpumpe (5) wieder zugeführt und somit in der entsprechenden Temperaturzone wieder eingeschichtet.

Noch vor Erreichen der Betriebstemperatur wird über eine geregelte Vakuumpumpe (4) im gesamten System ein Druck von > 400 mbar eingestellt. Ist der Enddruck erreicht, wird der Umlaufventilator (6) in Betrieb genommen, so dass das Strippgas mit definiertem Gasdurchsatz aus dem Strippbehälter (1) über die gekühlte Leitung (12) abgesaugt sowie Rücklaufgas aus dem Vorlagebehälter (2) dem Strippbehälter über die Leitung (13) zugeführt wird.

Während des Batchprozesses wird die Temperatur im Strippbehälter (1) durch Zu- und Abschalten der Heizwasserpumpe (5) konstant auf 75-80 °C gehalten, während der Druck langsam auf 400 - 500 mbar steigt.

Unter diesen Bedingungen werden im Laufe von etwa 2 Stunden aus dem Ablauf zunächst CO₂ und danach Ammoniak ausgetrieben und in der nachgeschalteten Vorlage ausgewaschen. In der Vorlage befindet sich eine Suspension aus 2,75 kg REA-Gips in 8 Liter Wasser, die mit 2 Liter einer 20%igen Schwefelsäure versetzt wurde. Die Masse des ausgetriebenen Ammoniaks beträgt ca. 850 g pro Batchprozess. Als Reaktionsprodukte entstehen ca. 2 kg Kalk und 3,3 kg Ammoniumsulfat in wässriger Phase. Beide Substanzen können ohne weitere Nachbehandlung als Düngemittel verwendet werden.
Die nicht gelösten Mineralmehl- und Kalkpartikel werden durch den Rührer (7) in Suspension gehalten. Die Rührgeschwindigkeit ist so zu wählen, dass keine Verstopfung von Zu- und Abflüssen durch ausgefallenen Kalk auftritt.

## Patentansprüche

1. Verfahren zur Gewinnung von Stickstoffdünger aus organischen Abfallprodukten in flüssiger Phase sowie zur Hygienisierung der Abfälle und zur Emissionsminderung durch thermische Behandlung unter Verwendung von mineralischen Zusätzen,
**dadurch gekennzeichnet, dass**
das Abfallprodukt ohne Zusatz von Chemikalien wie Säuren oder Laugen auf Temperaturen zwischen 40°C und 90°C erhitzt, gleichzeitig der Druck auf zunächst 10 bis 30 kPa evakuiert und dann der Druck auf 40 bis 80 kPa erhöht wird, ohne dass merkliche Mengen Wasser mit übergehen, das dabei entweichende und Kohlendioxid und Ammoniak enthaltende Gas gekühlt und in ein wässriges Absorptionsmittel eingeleitet bzw. mit ihm in Kontakt gebracht, der hierbei gebildete Stickstoffdünger ausgetragen und das nicht absorbierte und Kohlendioxid enthaltende Überschussgas bei Aufrechterhaltung der Temperatur im Ablaufbehälter auf dem vorbestimmten Wert so in den Prozess zurückgeleitet wird, dass der zu Beginn des Prozesses durch eine Vakuumpumpe erzeugte, zwischen 10 und 80 kPa liegende Unterdruck durch den Verlauf des Prozesses autogen aufrecht erhalten und der Ammoniumstickstoff fast vollständig entfernt wird.

2. Verfahren nach Anspruch 1, **dadurch gekennzeichnet, dass** das nicht absorbierte und Kohlendioxid enthaltende Überschussgas in den Kreislauf zurück geleitet wird, indem es entweder
- durch das zu behandelnde Abfallprodukt oder
- direkt oberhalb des zu behandelnden Abfallprodukts oder
- über das Gaskühlsystem oberhalb des zu behandelnden Abfallprodukts oder
- geteilt und ein Teilstrom durch das Abfallprodukt und ein weiterer Teilstrom oberhalb des Abfallprodukts
eingeleitet wird.

3. Verfahren nach Anspruch 1 und 2, **dadurch gekennzeichnet, dass** im vorderen Teil des Gaskühlsystems eine Temperatur eingestellt wird, die mindestens 3 und höchstens 15 K unter der Temperatur im Strippbehälter liegt, während im hinteren Teil die weitere Abkühlung auf 40°C erfolgt.

4. Verfahren nach einem oder mehreren der Ansprüche 1 bis 3, **dadurch gekennzeichnet, dass** dem im Kreislauf geführten Überschussgas von außen zusätzlich Kohlendioxid im Gemisch mit anderen Gasen zugesetzt wird.

5. Verfahren nach einem oder mehreren der Ansprüche 1 bis 4, **dadurch gekennzeichnet, dass** als Abfallprodukt vergorene Gülle verwendet und diese unter vermindertem Druck auf 70 bis 85°C erhitzt wird.

6. Verfahren nach Anspruch 5, **dadurch gekennzeichnet, dass** die vergorene Gülle vor ihrer thermischen Vakuumbehandlung in an sich bekannter Weise filtriert und die nach der thermischen Behandlung entstandene hygienisierte Ablaufgülle als praktisch geruchloses und an Stickstoffverbindungen abgereichertes Trübwasser auf Wiesen und Felder aufgesprüht wird, während die durch das Filtrieren abgetrennten Feststoffe kompostiert werden.

7. Verfahren nach einem oder mehreren der Ansprüche 1 bis 6, **dadurch gekennzeichnet, dass** als wässriges Absorptionsmittel eine schwefelsaure Lösung und/oder eine Gips-Aufschlämmung mit einem Feststoffgehalt von 10 Masse% bis 50 Masse% verwendet wird, wobei letztere in einem Vorlagegefäß gerührt und das ausgefallenen Kalk und Ammonsulfat enthaltende Produkt aus dem Behälter abgenommen wird.

8. Vorrichtung zur Gewinnung von Stickstoffdünger nach einem oder mehreren der Ansprüche 1 bis 7, bestehend aus folgenden wesentlichen Teilen
- Strippbehälter für Erwärmung unter Unterdruck (1),
- Vorlagegefäß für Reaktion in heterogener Phase (2),
- Wärmespeicher zum Wärmeaustausch (3),
- Vakuumpumpe (4),
- Heizwasserpumpe (5),
- Umlaufventilator (6),
- Rührer (7),
sowie an sich bekannten Rohrleitungen, Absperrorganen und der Meß- und Regelungstechnik
**dadurch gekennzeichnet, dass** zur Sicherung einer wirksamen Kreislaufführung
- die Vorrichtung ein zusätzliches Gaskühlsystem mit aufsteigender
Trennsäule (18) und absteigendem Kühler (19)
und
- zusätzliche Rohrleitungen und Kugelhähne (20, 21, 22) enthält,
damit das Kreislaufgas
- ganz oder teilweise in den Strippbehälter (1) oberhalb des Abfallprodukts oder
- über das Kühlsystem in den Vorlagebehälter (2) oder
- teilweise in den Strippbehälter (1) in das Abfallprodukt
eingeleitet werden kann, wobei die Restströme bei Teilung des Kreislaufgases wahlweise in die zwei übrigen der bezeichneten Zuflussstellen eingeleitet werden.

## Claims

1. Method for producing nitrogen fertilizer from organic waste products in liquid phase and for hygienizing the wastes and reducing the emissions by thermal treatment using mineral additions,
**characterized in that** the waste product is heated without the addition of chemicals such as acids or lyes to temperatures between 40 and 90 °C, simultaneously the pressure is first evacuated to 10 to 30 kPa, and then the pressure is increased to 40 to 80 kPa, without being accompanied by appreciable amounts of water, the escaping gas containing carbon dioxide and ammonia is cooled drown and introduced into an aqueous absorption agent or brought into contact therewith, the nitrogen fertilizer formed thereby is discharged and the excess gas not having been absorbed and containing carbon dioxide is conducted back into the process, with maintenance of the temperature in the discharge container at a predetermined value, such that the underpressure between 10 and 80 kPa generated at the beginning of the process by a vacuum pump is autogenously maintained by the progress of the process, and the ammonium nitrogen is nearly fully removed.

2. Method according to claim 1, **characterized in that** the excess gas not having been absorbed and containing carbon dioxide is conducted back into the cycle by either
- conducting it through the waste product to be treated, or
- directly above the waste product to be treated, or
- through the gas cooling system above the waste product to be treated, or
- dividing it and conducting a partial flow through the waste product and another partial flow above the waste product.

3. Method according to claim 1 and 2, **characterized in that** a temperature is adjusted in the front portion of the gas cooling system, which is at least 3 K and at most 15 K below the temperature in the stripping container, whereas in the rear part the further cooling-down process to 40 °C takes place.

4. Method according to one or several of claims 1 to 3, **characterized in that** to the excess gas conducted in the cycle, in addition carbon dioxide in a mixture with other gases is added from outside.

5. Method according to one or several of claims 1 to 4, **characterized in that** fermented manure is used as waste product, and that it is heated up to 70 to 85 °C at a reduced pressure.

6. Method according to claim 5, **characterized in that** the fermented manure is filtered before its thermal vacuum treatment in a per se known manner, and that the hygienized discharge manure formed after the thermal treatment is sprayed on meadows and fields as a virtually odorless sludge liquor stripped from nitrogen compounds, whereas the solid substances separated after filtration are composted.

7. Method according to one or several of claims 1 to 6, **characterized in that** as said aqueous absorption agent, a sulfuric solution and/or a gypsum suspension having a content of solid matter of 10 % by mass to 50 % by mass is used, wherein the latter is stirred in a receiver container, and the product containing deposited lime and ammonium sulfate is taken out from the container.

8. device for producing nitrogen fertilizer according to one or several of claims 1 to 7, composed of the following essential parts:
- a stripping container for heating at underpressure (1),
- a receiver container for a reaction in heterogeneous phase (2),
- a heat storage for heat exchange (3),
- a vacuum pump (4),
- a heating water pump (5),
- a circulation fan (6),
- a stirrer (7),
and per se known pipelines, shutoff devices, and measurement and control devices
**characterized in that** in order to secure an effective circulation process,
- the device comprises an additional gas cooling system with an upwards directed separating column (18) and a downwards directed cooler (19), and
- additional pipelines and ball valves (20, 21, 22), in order that the circulating gas
- can be fed fully or partially into the stripping container (1) above the waste product, or
- through the cooling system into the receiver container (2), or
- partially into the stripping container (1) into the waste product, wherein the residual flows in case of a division of the circulating gas are optionally fed into the two remaining designated entry positions.

## Revendications

1. Procédé destiné à obtenir de l'engrais azoté à partir de déchets organiques en phase liquide ainsi qu'à rendre lesdits déchets plus hygiéniques et à réduire les émissions par un traitement thermique en mettant en oeuvre des additifs minéraux,
**caractérisé en ce que**,
le déchet est réchauffé, sans y ajouter de produits chimiques tels que les acides ou les solutions alcalines, à des température comprises entre 40 °C et 90 °C, tout en réduisant d'abord la pression à une valeur comprise entre 10 et 30 kPa puis en augmentant la pression à une valeur comprise entre 40 et 80 kPa sans entraînement d'eau en quantités significatives, le gaz qui s'échappe et qui contient du dioxyde de carbone et de l'ammoniac étant refroidi puis introduit dans un agent d'adsorption aqueux et/ou mis en contact avec ce dernier, l'engrais azoté ainsi formé étant évacué et le gaz excédentaire qui n'a pas été adsorbé et qui contient du dioxyde de carbone étant réintroduit dans le processus en maintenant la température dans le récipient d'écoulement à la valeur préalablement définie, faisant en sorte que la dépression atteignant des valeurs comprises entre 10 et 80 kPa qui, au début du processus, est réalisée au moyen d'une pompe à vide, soit maintenue de façon autogène et l'azote ammoniacal soit presque entièrement enlevé.

2. Procédé selon la revendication 1, **caractérisé en ce que** ledit gaz excédentaire qui n'a pas été adsorbé et qui contient du dioxyde de carbone, est recyclé en le faisant passer
- soit à travers le déchet à traiter
- soit directement au-dessus du déchet à traiter
- soit par le système de refroidissement des gaz situé au-dessus du déchet à traiter
- soit, après division du flux, en partie à travers le déchet, l'autre partie étant introduite au-dessus du déchet.

3. Procédé selon la revendication 1 et 2, **caractérisé en ce que**, dans la partie antérieure du système de refroidissement des gaz, on règle la température à une valeur inférieure d'au moins 3 et d'au plus 15 K à la température dans le récipient d'entrainement au gaz, alors que dans la partie postérieure, on poursuit le refroidissement jusqu'à atteindre 40 °C.

4. Procédé selon l'une ou plusieurs des revendications 1 à 3, **caractérisé en ce que** l'on ajoute, audit gaz excédentaire recyclé, du dioxyde de carbone provenant d'une source extérieure, en mélange avec d'autres gaz.

5. Procédé selon l'une ou plusieurs des revendications 1 à 4, **caractérisé en ce que** l'on utilise, en tant que déchet, du lisier fermenté et que l'on réchauffe ce dernier sous pression réduite à 70 à 85 °C.

6. Procédé selon la revendication 5, **caractérisé en ce que**, préalablement au traitement thermique sous vide, ledit lisier fermenté est filtré d'une manière connu en soi, et que le lisier rendu hygiénique qui s'écoule suite au traitement thermique, est épandu sur des prés et des champs sous forme d'une eau trouble qui est quasiment inodore et appauvrie en composés azotés, alors que les matières solides séparées lors du filtrage sont compostées.

7. Procédé selon l'une ou plusieurs des revendications 1 à 6, **caractérisé en ce que** l'on utilise, en tant qu'agent d'adsorption aqueux, une solution d'acide sulfurique et/ou une suspension de gypse dont la teneur en matière sèche est comprise entre 10 % en masse et 50 % en masse, cette dernière étant agitée dans un récipient de recueil, et le produit contenant du calcaire et du sulfate d'ammonium précipités étant prélevé dans ledit récipient.

8. Dispositif destiné à l'obtention d'engrais azoté selon une ou plusieurs des revendications 1 à 7, constitué des pièces essentielles suivantes
- récipient d'entrainement au gaz, destiné au réchauffement sous pression réduite (1),
- récipient de recueil, destiné à la réaction en phase hétérogène (2),
- réservoir de chaleur, destiné à l'échange de chaleur (3)
- pompe à vide (4),
- pompe à eau chaude (5),
- ventilateur de circulation (6),
- agitateur (7),
ainsi que des tuyaux, des organes d'obturation et des installations de mesure et de réglage connus en soi
**caractérisé en ce que**, pour assurer un recyclage efficace,
- le dispositif contient un système supplémentaire de refroidissement des gaz, doté d'une colonne de séparation ascendant (18) et d'un réfrigérant descendant (19)
et
- des tuyaux et des robinets à bille supplémentaires (20, 21, 22),
afin que le gaz de recyclage puisse passer
- en totalité ou en partie dans le récipient d'entrainement au gaz (1) situé au-dessus du déchet, ou
- à travers le système de refroidissement dans le récipient de recueil (2) ou
- en partie dans le déchet se trouvant au sein du récipient d'entrainement au gaz (1)
les débits résiduels étant introduits, dans le cas d'une division du gaz de recyclage, dans l'un ou l'autre des autres entrées indiquées comme telles.
